# EUROPEAN PATENT SPECIFICATION

(11) **EP 4 283 235 B1**
(45) Date of publication and mention of the grant of the patent: **02.04.2025**
(21) Application number: 22192790.8
(22) Date of filing: 30.08.2022
(51) Int. Cl.: F28D 1/06, F28F 7/00, F28D 21/00, F28D 1/02, F28D 7/16, F28F 1/20, F28F 1/04, F28F 1/22, F28F 7/02, F28F 9/00, F28F 21/08, F28F 9/013, F28F 21/06, H02K 9/19, H02K 5/20

(54) **COOLING APPARATUS FOR DRIVE MOTOR AND MANUFACTURING METHOD THEREOF**
KÜHLVORRICHTUNG FÜR ANTRIEBSMOTOR UND HERSTELLUNGSVERFAHREN DAFÜR
APPAREIL DE REFROIDISSEMENT POUR MOTEUR D'ENTRAÎNEMENT ET SON PROCÉDÉ DE FABRICATION

(30) Priority: 27.05.2022 KR 20220065265
(43) Date of publication of application: 29.11.2023
(73) Proprietor: Youngshin Precision Co., Ltd, Gyeongju-si, Gyeongsangbuk-do 38039 (KR)
(72) Inventor: JOO, Do Jae, 37562 Pohang-si, Gyeongsangbuk-do (KR); KIM, In Sang, 38080 Gyeongju-si, Gyeongsangbuk-do (KR); KIM, Hong Ki, 37853 Pohang-si, Gyeongsangbuk-do (KR); CHA, Seong Wook, 38083 Gyeongju-si, Gyeongsangbuk-do (KR); RYU, Hui Do, 38048 Gyeongju-si, Gyeongsangbuk-do (KR); LEE, Jae Gyeong, 37528 Pohang-si, Gyeongsangbuk-do (KR); YI, Ga Hyeon, 42637 Dalseo-gu, Daegu (KR)
(74) Representative: Iannone, Carlo Luigi

(56) References cited:
- US-A- 3 976 124
- US-A- 5 460 900
- US-A1- 2011 146 958
- US-A1- 2018 347 911

## Description

### BACKGROUND

### 1. Field

One or more example embodiments relate to a cooling apparatus for a drive motor and a manufacturing method thereof.

### 2. Description of Related Art

Since the Paris Agreement was adopted in 2015, member countries have been making continuous efforts to reduce greenhouse gas emissions. As a part of such effort, technology is being developed for electric vehicles in place of technology for conventional internal combustion engine vehicles. In particular, as a drive motor of an electric vehicle is a core component that provides power to the electric vehicle, various technologies are being developed to increase the efficiency of the drive motor. If the drive motor is not properly cooled against heat generated during operation, the lifespan of the motor may be shortened or internal parts of the motor may be damaged. That is, the cooling technology of the drive motor may have an absolute influence on the performance of the motor. Therefore, to increase the efficiency and improve the performance of the motor, it may be necessary to efficiently by cooling reduce the heat generated inside the motor. For example, KR Patent Application Publication No. 10-2012-0121758 discloses an electric motor and an electric vehicle provided with the same. US 2011/146958 A1 discloses a cooling apparatus according to the preamble of claim 1.

The above description is information the inventor(s) acquired during the course of conceiving the present disclosure, or already possessed at the time, and is not necessarily art publicly known before the present application was filed.

### SUMMARY

Example embodiments provide a cooling apparatus for a drive motor and a manufacturing method thereof capable of: improving heat exchange efficiency inside the motor by implementing a fusion cooling scheme of water cooling and oil cooling; shortening manufacturing time by simplifying the manufacturing process by providing a cooling apparatus with a simple structure in which the upper and lower structures are symmetrical enabling the cooling apparatus to be produced with one manufacturing device; and improving robustness of the cooling apparatus by designing a structure in which a cooling channel is easy to fuse.

The technical tasks obtainable from the present disclosure are not limited to the above-mentioned technical tasks. Other unmentioned technical tasks can be clearly understood from the following description by those having ordinary skill in the technical field to which the present disclosure pertains.

Disclosed is a cooling apparatus for a drive motor according to example embodiments.

According to the invention, the cooling apparatus for a drive motor including an oil reserve tank in which cooling oil flows includes a first water jacket in which a first cooling channel passing up and down through the oil reserve tank is formed and a second water jacket in which a second cooling channel corresponding to the first cooling channel is formed, wherein the first water jacket and the second water jacket may be coupled to form the oil reserve tank.

The first water jacket includes a first housing in which a first water jacket inner space is defined by a first surface, a second surface opposite to the first surface, and at least two third surfaces forming a side between the first surface and the second surface and a first dividing plate dividing the first water jacket inner space into a first inner space through which coolant flows and a second inner space through which cooling oil flows, wherein the first cooling channel extends from the first dividing plate and pass through the second inner space.

The second water jacket may include a second housing in which a second water jacket inner space is defined by a fourth surface, a fifth surface opposite to the fourth surface, and at least two sixth surfaces forming a side between the fourth surface and the fifth surface and a second dividing plate dividing the inner space of the second water jacket into a third inner space through which cooling oil flows and a fourth inner space through which coolant flows, wherein the second cooling channel may extend from the second dividing plate and pass through the third inner space.

The first cooling channel may extend from the first dividing plate to an end portion of the second inner space, and the second cooling channel may extend from the second dividing plate to an end portion of the third inner space.

When the first water jacket and the second water jacket are coupled, the second inner space and the third inner space may be combined to form the oil reserve tank, and the first cooling channel and the second cooling channel may be connected to pass through the oil reserve tank, and the oil reserve tank may be formed by at least a portion of the first surface, at least a portion of the second surface, at least portions of the third surfaces, at least a portion of the fourth surface, at least a portion of the fifth surface, at least portions of the sixth surfaces, the first dividing plate, and the second dividing plate.

A coolant inlet may be formed on the first surface and a coolant outlet may be formed on the fifth surface.

Ribs may be formed in a connecting portion between the first cooling channel and the first dividing plate, and in a connecting portion between the second cooling channel and the second dividing plate.

The cooling apparatus for the drive motor may further include a first cover member covering an end portion of the first inner space and a fourth cover member covering an end portion of the fourth inner space, and the end portions of the first inner space and the fourth inner space may be open.

A plurality of first cooling channels and a plurality of second cooling channels may be provided, and the first cooling channel and the second cooling channel may each have a hexagonal cross section.

At least two of the plurality of first cooling channels may be disposed adjacent to each other and connected to each other, or at least two of the plurality of second cooling channels may be disposed adjacent to each other and connected to each other.

The cooling apparatus for the drive motor may further include a heat sink connecting adjacent cooling channels, wherein the heat sink may be slidably coupled to a longitudinal groove of the adjacent cooling channels.

At least a portion of the first cooling channel or at least a portion of the second cooling channel may include a protrusion protruding from an end portion and a depression recessed from the end portion and having a shape corresponding to the protrusion.

The first cooling channel or the second cooling channel may include a cooling channel body at least partly composed of a metallic material, and a cooling channel end portion connected to the cooling channel body and at least partly composed of a plastic material.

According to the invention, a method of manufacturing a cooling apparatus for a drive motor including an oil reserve tank in which cooling oil flows includes manufacturing a first water jacket in which a first cooling channel passing up and down through the oil reserve tank is formed, manufacturing a second water jacket in which a second cooling channel corresponding to the first cooling channel is formed, aligning the first cooling channel and the second cooling channel, and coupling the first water jacket and the second water jacket to form an inner space of the oil reserve tank.

The first cooling channel or the second cooling channel includes a cooling channel body at least partly composed of a metallic material, and a cooling channel end portion connected to the cooling channel body and at least partly composed of a plastic material, and at least one of the first cooling channel or the second cooling channel is manufactured by double injection, and the coupling of the first water jacket and the second water jacket is performed by ultrasonic welding.

As described above, according to example embodiments, a cooling apparatus having a simple structure for a drive motor may have excellent productivity due to the simple structure, and may more efficiently cool the drive motor via a dual cooling scheme using water cooling and oil cooling, and may be more robust having a structure in which an end portion of a cooling channel is easy to fuse.

The effects of the cooling apparatus for the drive motor are not limited to the above-mentioned effects, and other unmentioned effects can be clearly understood from the following description by one of ordinary skill in the art.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a schematic view of a cooling system for a drive motor according to an example embodiment;
FIG. 2A-2D are views illustrating a configuration of a cooling apparatus for a drive motor according to an example embodiment;
FIG. 3 is a view illustrating a cross section of a cooling channel of a cooling apparatus for a drive motor according to an example embodiment;
FIG. 4 is a view illustrating a configuration of a first cooling channel and a second cooling channel according to an example embodiment;
FIG. 5 is a view illustrating an arrangement of a second cooling channel according to an example embodiment;
FIG. 6 is a view illustrating a configuration in which a rib is formed in a second cooling channel according to an example embodiment;
FIG. 7A-7B are views illustrating a configuration in which a heat sink is formed between second cooling channels according to an example embodiment; and
FIG. 8 is a flowchart illustrating a method of manufacturing a cooling apparatus for a drive motor according to an example embodiment.

The accompanying drawings illustrate preferred example embodiments of the present disclosure, and are provided together with the detailed description to promote better understanding of the technical idea of the present disclosure. Therefore, the present disclosure should not be construed as being limited to the example embodiments set forth in the drawings.

### DETAILED DESCRIPTION

Hereinafter, examples will be described in detail with reference to the accompanying drawings. However, various alterations and modifications may be made to the examples.

The terminology used herein is for the purpose of describing particular examples only and is not to be limiting of the examples. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which examples belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the examples with reference to the accompanying drawings, like reference numerals refer to like constituent elements and a repeated description related thereto will be omitted. In the description of the example embodiments, a detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The constituent element, which has the same common function as the constituent element included in any one example embodiment, will be described by using the same name in other example embodiments. Unless disclosed to the contrary, the configuration disclosed in any one example embodiment may be applied to other example embodiments, and the specific description of the repeated configuration will be omitted.

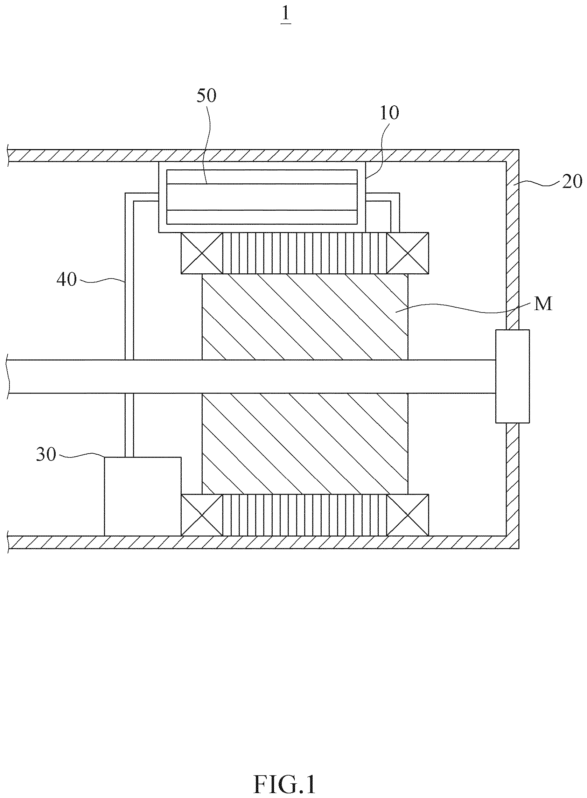

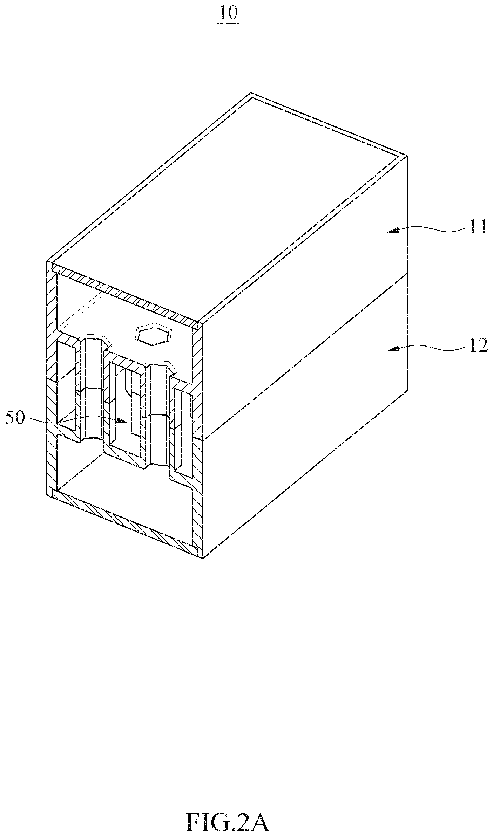

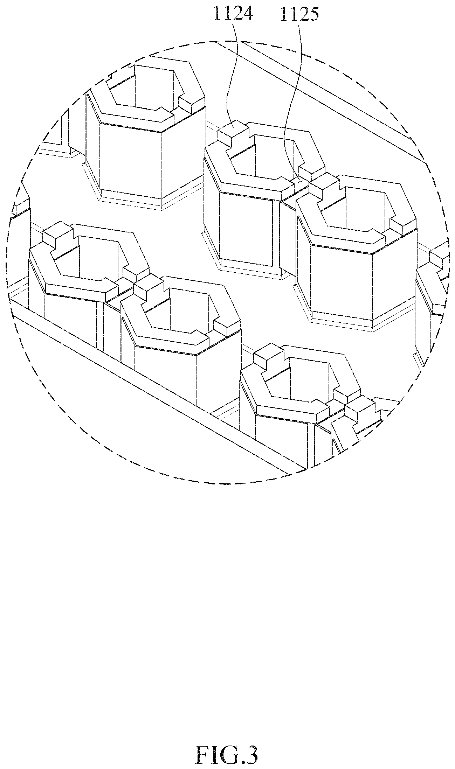

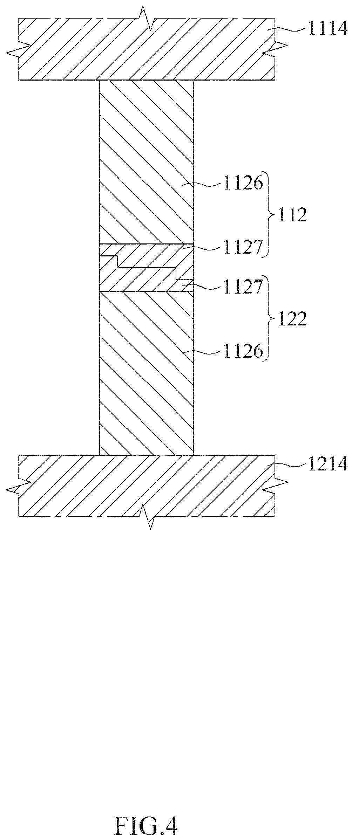

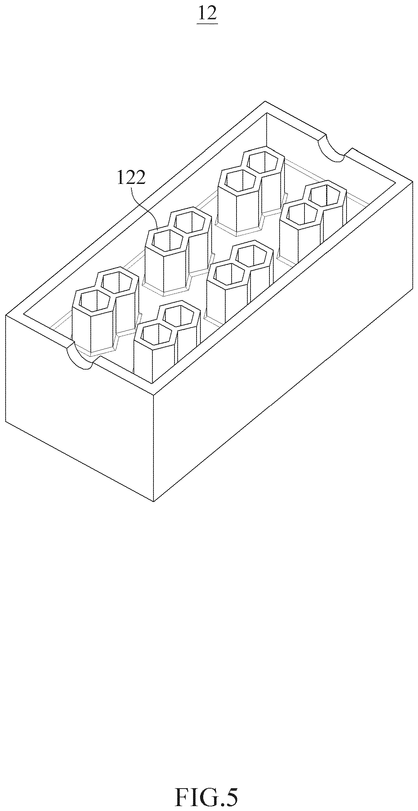

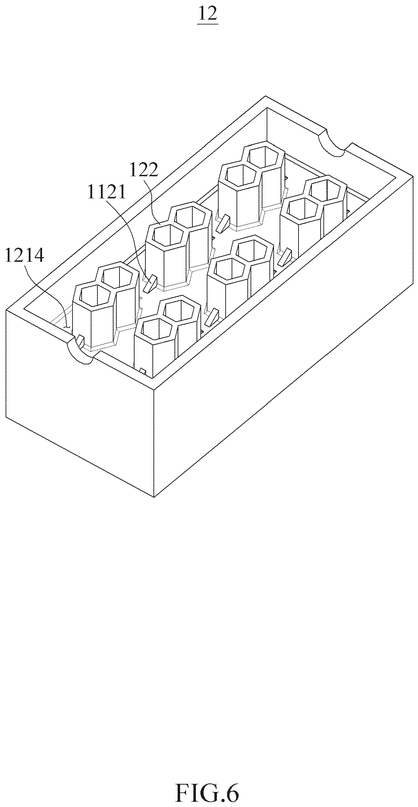

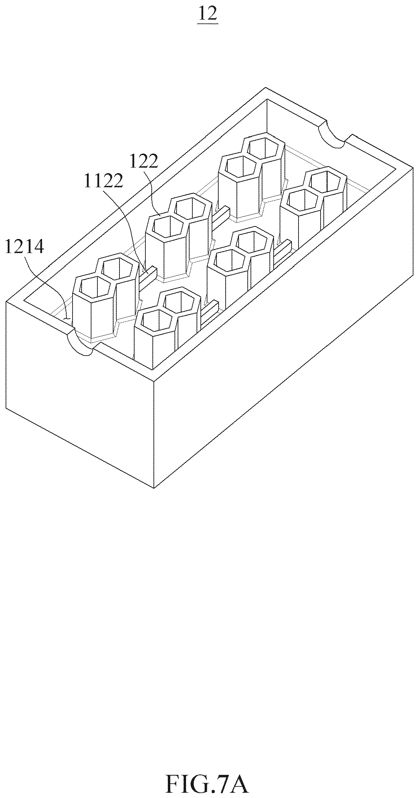

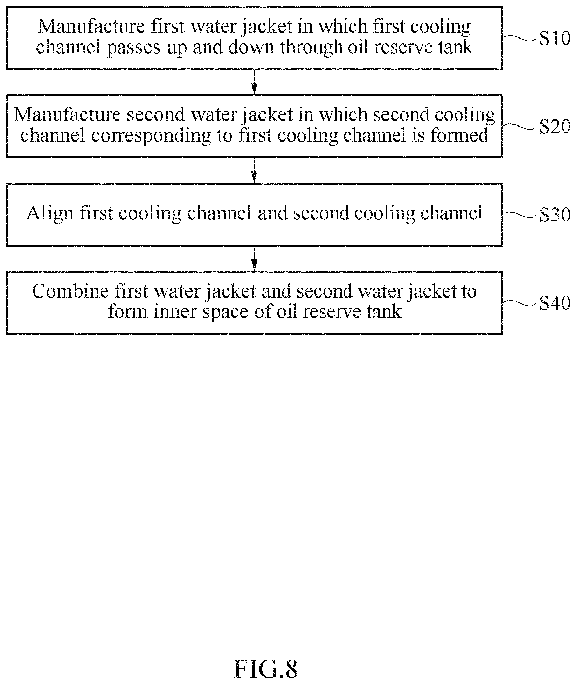

With reference to the drawings, a cooling apparatus and system for a drive motor is described. FIG. 1 is a schematic view of a cooling system for a drive motor according to an example embodiment, FIG. 2A-2D are views illustrating a configuration of a cooling apparatus for a drive motor according to an example embodiment, FIG. 3 is a view illustrating a cross section of a cooling channel of a cooling apparatus for a drive motor according to an example embodiment, FIG. 4 is a view illustrating a configuration of a first cooling channel and a second cooling channel according to an example embodiment, FIG. 5 is a view illustrating an arrangement of a second cooling channel according to an example embodiment, FIG. 6 is a view illustrating a configuration in which a rib is formed in a second cooling channel according to an example embodiment, FIG. 7A-7B are views illustrating a configuration in which a heat sink is formed between second cooling channels according to an example embodiment, and FIG. 8 is a flowchart illustrating a method of manufacturing a cooling apparatus for a drive motor according to an example embodiment.

Referring to FIG. 1, a cooling system 1 for a drive motor according to an example embodiment may include a housing 20 of the drive motor, an oil pump 30, an oil cooling line 40, an oil reserve tank 50, and a cooling apparatus 10 for the drive motor.

The housing 20 of the drive motor according to an example embodiment may form the exterior of the drive motor. A space in which the drive motor, the oil pump 30, the oil cooling line 40, the oil reserve tank 50, and the cooling apparatus 10 for the drive motor are accommodated may be formed in the housing 20 of the drive motor.

The oil pump 30 according to an example embodiment may be provided inside the housing 20 of the drive motor and may supply oil to the oil cooling line 40 described below. For example, the oil pump 30 may be provided at the bottom of the housing 20 of the drive motor to circulate cooling oil in the oil cooling line 40 by applying pressure to the oil cooling line 40. In this example, the cooling oil may be used to cool the drive motor.

The oil cooling line 40 according to an example embodiment may form a path to circulate cooling oil to cool the drive motor. The oil cooling line 40 may be connected from one side of the oil pump 30 to the other side of the oil pump 30 through an oil reserve tank 50 described below. The oil cooling line 40 may be provided inside the housing 20 of the drive motor to cool the drive motor, and a structural arrangement of the oil cooling line 40 is not limited to what is shown in the drawings and may be flexibly changed.

The oil reserve tank 50 according to an example embodiment may store and cool cooling oil. A space in which cooling oil flows may be formed inside the oil reserve tank 50, and the cooling apparatus 10 for the drive motor described below may be provided in the space in which the cooling oil flows, so that the cooling oil may be cooled by heat exchange.

The cooling apparatus 10 for the drive motor according to an example embodiment may be provided in the oil reserve tank 50 to cool the cooling oil flowing in the oil reserve tank 50.

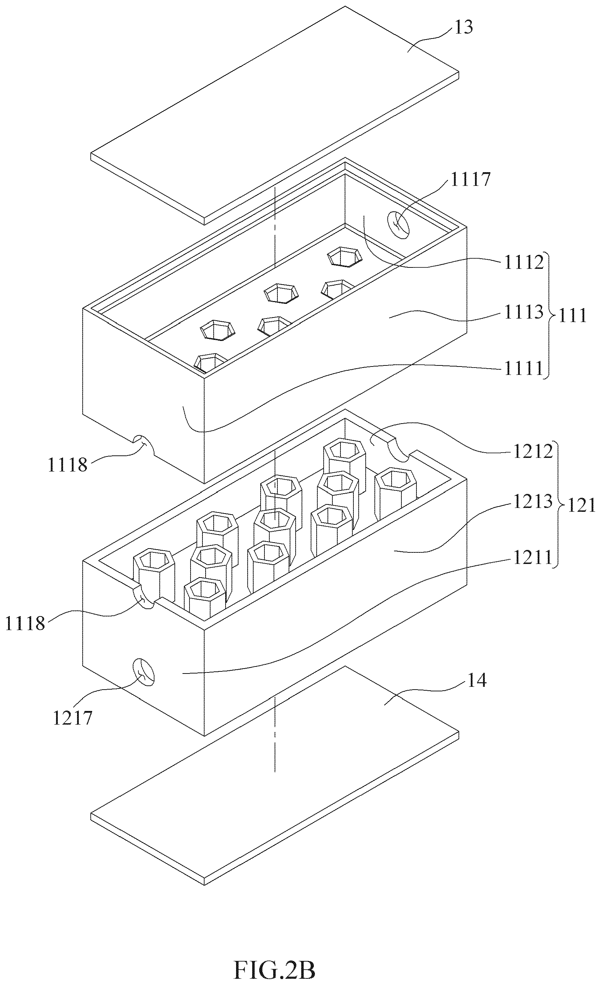

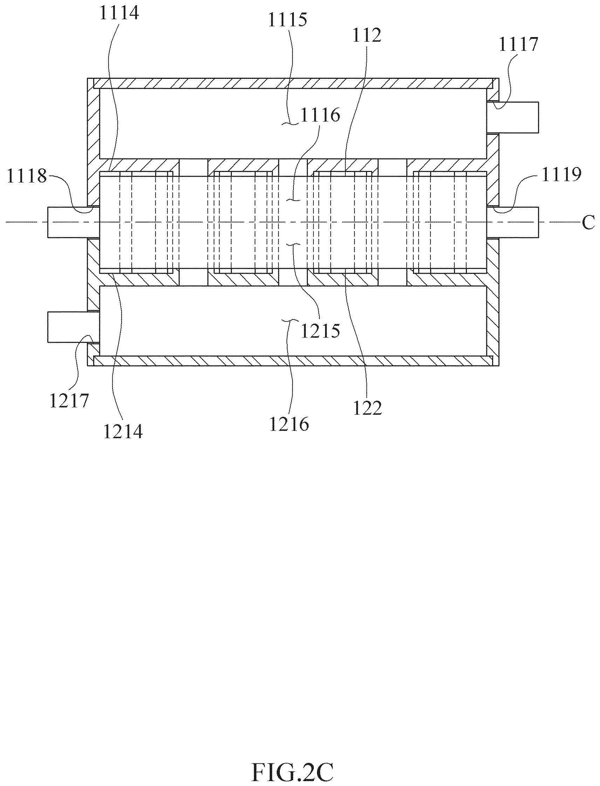

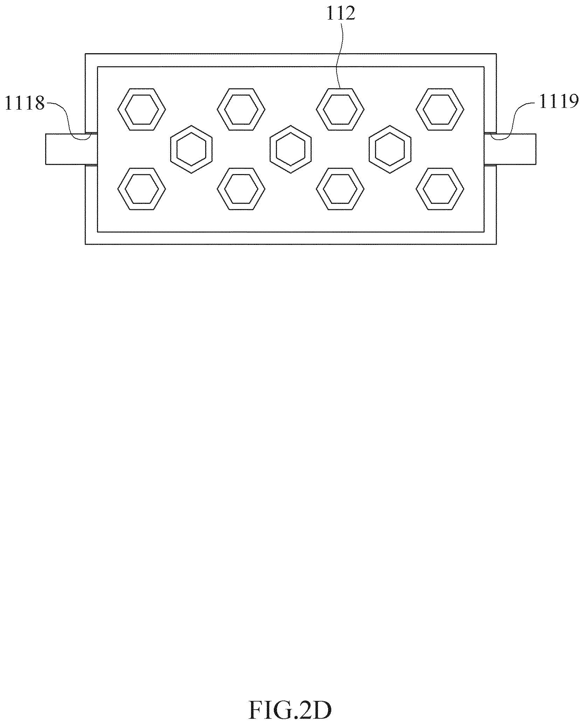

Referring to FIG. 2, the cooling apparatus 10 for the drive motor according to an example embodiment is described in detail.

The cooling apparatus 10 for the drive motor according to an example embodiment may include a first water jacket 11 and a second water jacket 12. The first water jacket 11 and the second water jacket 12 may be connected to each other and may each be formed in a shape corresponding to the other. The cooling apparatus 10 for the drive motor may combine the first water jacket 11 and the second water jacket 12 of corresponding shapes to form the oil reserve tank 50 having a space in which cooling oil flows. At the same time, a cooling channel passing up and down through the oil reserve tank 50 may be formed.

In the first water jacket 11 according to an example embodiment, a first cooling channel 112 passing up and down through the oil reserve tank 50 may be formed. The first water jacket 11 may include a first housing 111 and a first dividing plate 1114.

The first housing 111 according to an example embodiment may include a first surface 1111, a second surface 1112 opposite to the first surface 1111, and at least two third surfaces 1113 forming a side between the first surface 1111 and the second surface 1112, by which a first water jacket inner space may be defined.

In addition, the first housing 111 may further include a first dividing plate 1114 in contact with the first surface 1111, the second surface 1112, and the third surface 1113, and dividing the first water jacket inner space into a first inner space 1115 and a second inner space 1116. Coolant may flow in the first inner space 1115, and cooling oil may flow in the second inner space 1116. Here, the first cooling channel 112 may be formed to extend from the first dividing plate 1114 and pass up and down through the second inner space 1116. For example, the first cooling channel 112 may extend from the first dividing plate 1114 to an end portion C of the second inner space 1116.

In addition, a cooling oil inlet 1118 may be formed in a semicircular shape on a surface of the first surface 1111. The cooling oil inlet 1118 may be formed on a surface of the first surface 1111 located on a side of the second inner space 1116. The cooling oil inlet 1118 may be connected to the oil cooling line 40, and oil may be supplied from the oil pump 30 to supply cooling oil to the second inner space 1116. The cooling oil inlet 1118 formed on the surface of the first surface 1111 may be formed in a semicircular shape and combined with the cooling oil inlet 1118 formed on a surface of the fourth surface 1211 to be described later, to form the cooling oil inlet 1118 in a circular shape.

In addition, a cooling oil outlet 1119 may be formed in a semicircular shape on a surface of the second surface 1112. The cooling oil outlet 1119 may also be formed on a surface of the second surface 1112 located on a side of the second inner space 1116, and the oil cooling line 40 may be connected to discharge cooling oil flowing through the second inner space 1116 to the outside. The cooling oil outlet 1119 formed on the surface of the second surface 1112 may also be formed in a semicircular shape, and combined with the cooling oil outlet 1119 formed on a surface of a fifth surface 1212 to be described later, to form the cooling oil outlet 1119 in a circular shape.

Here, a coolant outlet 1117 may be formed on a surface of the second surface 1112. The coolant outlet 1117 may be formed on a surface of the second surface 1112 located on a side of the first inner space 1115. In addition, although not shown in the drawings, the coolant outlet 1117 may be connected to a coolant line to discharge the coolant to the outside.

According to the above-mentioned configuration, the coolant may exchange heat with the cooling oil flowing in the second inner space 1116 while flowing along the first cooling channel 112 formed on a surface of the first dividing plate 1114 in the first inner space 1115.

In the second water jacket 12, a second cooling channel 122 passing up and down through the oil reserve tank 50 may be formed. The second water jacket 12 may include a second housing 121 and a second dividing plate 1214.

The second housing 121 may include a fourth surface 1211, a fifth surface 1212 opposite to the fourth surface 1211, and at least two sixth surfaces 1213 forming a side between the fourth surface 1211 and the fifth surface 1212, by which a second water jacket inner space may be defined.

In addition, the second housing 121 may further include a second dividing plate 1214 in contact with the fourth surface 1211, the fifth surface 1212, and the sixth surface 1213, and dividing the second water jacket inner space into a third inner space 1215 and a fourth inner space 1216. Cooling oil may flow in the third inner space 1215, and coolant may flow in the fourth inner space 1216. Here, the second cooling channel 122 may be formed to extend from the second dividing plate 1214 and pass up and down through the third inner space 1215. For example, the second cooling channel 122 may extend from the second dividing plate 1214 to an end portion of the third inner space 1215.

In this example, a coolant inlet 1217 may be formed on a surface of the fourth surface 1211. The coolant inlet 1217 may be formed on a surface of the fourth surface 1211 located on a side of the fourth inner space 1216. In addition, although not shown in the drawings, the coolant inlet 1217 may be connected to a coolant line to introduce external coolant into the fourth inner space 1216.

In addition, the cooling oil inlet 1118 may be formed in a semicircular shape on a surface of the fourth surface 1211. The cooling oil inlet 1118 may be formed on a surface of the fourth surface 1211 located on a side of the third inner space 1215. The cooling oil inlet 1118 may be connected to the oil cooling line 40, and oil may be supplied from the oil pump 30 to supply cooling oil to third inner space 1215. The cooling oil inlet 1118 formed on the surface of the fourth surface 1211 may be formed in a semicircular shape and combined with the cooling oil inlet 1118 formed on a surface of the first surface 1111, to form the cooling oil inlet 1118 in a circular shape.

In addition, the cooling oil outlet 1119 may be formed in a semicircular shape on a surface of the fifth surface 1212. The cooling oil outlet 1119 may also be formed on a surface of the fifth surface 1212 located on a side of the third inner space 1215, and the oil cooling line 40 may be connected to discharge cooling oil flowing through the third inner space 1215 to the outside. The cooling oil outlet 1119 formed on the surface of the fifth surface 1212 may also be formed in a semicircular shape, and combined with the cooling oil outlet 1119 formed on a surface of the second surface 1112, to form the cooling oil outlet 1119 in a circular shape.

According to the above-mentioned configuration, the coolant may exchange heat with the cooling oil flowing in the third inner space 1215 while flowing along the second cooling channel 122 formed on a surface of the second dividing plate 1214 in the fourth inner space 1216.

In addition, the cooling apparatus 10 for the drive motor according to an example embodiment may further include a first cover member 13 covering an end portion of the first inner space 1115 and a fourth cover member 14 covering an end portion of the fourth inner space 1216, wherein the end portions of the first inner space 1115 and the fourth inner space 1216 are open. Providing the first cover member 13 and the fourth cover member 14 may make manufacturing and maintaining the cooling apparatus 10 for the drive motor easier.

According to the above-mentioned configuration, when the first water jacket 11 and the second water jacket 12 are coupled, the second inner space 1116 and the third inner space 1215 may be combined to form the oil reserve tank 50, and the first cooling channel 112 and the second cooling channel 122 may be connected to form a structure passing up and down through the oil reserve tank 50. Here, the oil reserve tank 50 may be formed by at least a portion of the first surface 1111, at least a portion of the second surface 1112, at least portions of the third surfaces 1113, at least a portion of the fourth surface 1211, at least a portion of the fifth surface 1212, at least portions of the sixth surfaces 1213, the first dividing plate 1114, and the second dividing plate 1214.

In the cooling apparatus 10 for the drive motor according to an example embodiment, a plurality of the first cooling channel 112 and the second cooling channel 122 may be provided, and the first cooling channel 112 and the second cooling channel 122 may each have a hexagonal cross section. Having hexagonal shaped cross sections may give the first cooling channel 112 and the second cooling channel 122 structural stability on the first dividing plate 1114 and the second dividing plate 1214, respectively. However, this is only an example, and the number and shape of the first cooling channel 112 and the second cooling channel 122 may be changed flexibly.

Referring to FIG. 3, in the cooling apparatus 10 for the drive motor according to an example embodiment, at least a portion of the first cooling channel 112 or at least a portion of the second cooling channel 122 may include a protrusion 1124 protruding from an end portion and a depression 1125 recessed from the end portion and having a shape corresponding to the protrusion 1124. For example, the protrusion 1124 may be formed on one side of the cross section of the first cooling channel 112, and the depression 1125 may be formed on one side of the cross section of the second cooling channel 122 corresponding to the protrusion 1124 so that the protrusion 1124 and the depression 1125 may be engaged and coupled to each other.

In this example, the cross sections of the first cooling channel 112 and the second cooling channel 122 may be formed to face each other. For example, the protrusion 1124 may be formed on one side of the cross section of the first cooling channel 112, and the depression 1125 may be formed on one side of the cross section of the second cooling channel 122 corresponding thereto, and on the other side of the cross section of the first cooling channel 112, the depression 1125 may be formed, and on the other side of the cross section of the second cooling channel 122, the protrusion 1124 may be formed, so that the one side and the other side of the cross sections of the first cooling channel 112 and the second cooling channel 122 may be formed to face each other and be simultaneously engaged. According to the above-mentioned configuration, when the first water jacket 11 and the second water jacket 12 are manufactured, productivity may be improved when each of the first water jacket 11 and the second water jacket 12 are formed to face the coupling surface in the same shape.

Referring to FIG. 4, the first cooling channel 112 or the second cooling channel 122 according to an example embodiment may include a cooling channel body 1126 and a cooling channel end portion 1127.

The cooling channel body 1126 of the first cooling channel 112 or the cooling channel body 1126 of the second cooling channel 122 may be formed to protrude from a surface in contact with the first dividing plate 1114 and the second dividing plate 1214, respectively. Here, the cooling channel body 1126 may be at least partly composed of a metallic material. When the cooling channel body 1126 is formed of a metallic material, it may be structurally stable.

The cooling channel end portion 1127 of the first cooling channel 112 or the cooling channel end portion 1127 of the second cooling channel 122 may be connected to the cooling channel body 1126. Here, the cooling channel end portion 1127 may be at least partly composed of a plastic material. When the cooling channel end portion 1127 is formed of a plastic material, the first cooling channel 112 and the second cooling channel 122 may be easy to fuse.

Referring to FIG. 5, in the cooling apparatus 10 for the drive motor according to an example embodiment, at least two of the plurality of first cooling channels 112 may disposed adjacent to each other and connected to each other, or at least two of the plurality of second cooling channels 122 may be disposed adjacent to each other and connected to each other. When at least two of the plurality of first cooling channels 112 and the plurality of second cooling channels 122 are disposed adjacent to each other and connected to each other, the cooling apparatus 10 for the drive motor may be more stable. Although there are two cooling channels disposed adjacent to each other in the drawings, the cooling channels are not limited in number, and the number of cooling channels may be changed flexibly.

Referring to FIG. 6, the cooling apparatus 10 for the drive motor according to an example embodiment may include a rib 1121 formed in a connection portion between the first cooling channel 112 and the first dividing plate 1114. The rib 1121 may support the first cooling channel 112 against the first dividing plate 1114 to provide structural stability. The rib 1121 may attenuate vibration in the first cooling channel 112 due to hydraulic pressure of coolant flowing inside the first cooling channel 112 and may prevent separation. In addition, the rib 1121 may be formed between the second cooling channel 122 and the second dividing plate 1214. The rib 1121 formed between the second cooling channel 122 and the second dividing plate 1214 is substantially the same in configuration and effect as the rib 1121 formed in the connection portion of the first cooling channel 112 and the first dividing plate 1114, so a description thereof is omitted.

Referring to FIG. 7A, the first cooling channel 112 and the second cooling channel 122 according to an example embodiment may further include a heat sink 1122 connecting the cooling channels 112 and 122 disposed adjacent to each other. The heat sink 1122 may support the first cooling channel 112 and the second cooling channel 122 against the first dividing plate 1114 and the second dividing plate 1214 to provide structural stability like the above described rib 1121. Here, a heat dissipation effect may be increased by using a material having a high heat transfer coefficient as the material for the heat sink 1122.

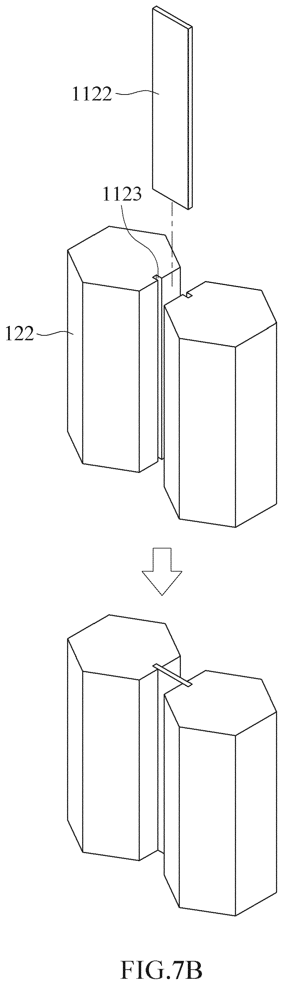

FIG. 7B is a diagram illustrating a structure in which the heat sink 1122 is connected between cooling channels. Referring to FIG. 7B, the heat sink 1122 according to an example embodiment may be slidably coupled to a longitudinal groove 1123 of adjacent cooling channels. For example, the groove 1123 may be respectively formed in a longitudinal direction of the first cooling channel 112 and the second cooling channel 122, and the heat sink 1122 may be slidably coupled to the groove 1123. According to the above-mentioned structure, a process of attaching the heat sink 1122 between the cooling channels by welding or the like may not be needed, so the productivity of the cooling apparatus 10 for the drive motor may be improved.

FIG. 8 is a flowchart schematically illustrating a method of manufacturing the cooling apparatus 10 for the drive motor according to an example embodiment.

Referring to FIG. 8, by a method of manufacturing the cooling apparatus 10 for the drive motor according to an example embodiment, in operation S10, the first water jacket 11 in which the first cooling channel 112 passes up and down through the oil reserve tank 50 may be manufactured. Here, the first water jacket 11 may be manufactured by injection molding or the like.

In operation S20, the second water jacket 12 in which the second cooling channel 122 corresponding to the first cooling channel 112 is formed may be manufactured. Here, since the second water jacket 12 has the same shape as the first water jacket 11, and is disposed opposed to the coupling surface, the second water jacket 12 may be manufactured in substantially the same manner as the first water jacket 11. Accordingly, the first water jacket 11 and the second water jacket 12 may be manufactured using the same mold or equipment, such that productivity may be improved.

In addition, at least one of the first cooling channel 112 or the second cooling channel 122 may include a cooling channel body 1126 at least partly composed of a metallic material, and a cooling channel end portion 1127 at least partly composed of a plastic material. Here, providing the cooling channel end portion 1127 of the first cooling channel 112 or the cooling channel end portion 1127 of the second cooling channel 122 composed of a plastic material, makes ultrasonic welding possible when the first water jacket 11 and the second water jacket 12 are combined, which will be described later.

In operation S30, the first cooling channel 112 and the second cooling channel 122 may be aligned. Here, the cooling channel end portion 1127 of the first cooling channel 112 formed in the first water jacket 11 and the cooling channel end portion 1127 of the second cooling channel 122 formed in the second water jacket 12 may be aligned to be in contact with each other. For the cooling channel end portion 1127 of the first cooling channel 112 and the cooling channel end portion 1127 of the second cooling channel 122 to be in contact with each other stably, the protrusion 1124 and the depression 1125 may be formed on the cooling channel end portion 1127, as described above. For example, the protrusion 1124 of the first cooling channel 112 may engage with the depression 1125 of the second cooling channel 122, and the depression 1125 of the first cooling channel 112 may engage with the protrusion 1124 of the second cooling channel 122 so that the first cooling channel 112 and the second cooling channel 122 may be stably fastened.

In operation S40, the first water jacket 11 and the second water jacket 12 may be combined to form an inner space of the oil reserve tank 50. The end portions of the first cooling channel 112 and the second cooling channel 122 may be fused to each other, and the end portions of the first water jacket 11 and the second water jacket 12 may be fused to each other, so that an inner space may be formed in the oil reserve tank 50, wherein the first cooling channel 112 and the second cooling channel 122 pass up and down through in the inner space of the oil reserve tank 50. Here, the coupling of the first water jacket 11 and the second water jacket 12 may be performed by ultrasonic welding.

According to example embodiments, a cooling apparatus for a drive motor may have a simple structure, so that productivity may be excellent, and heat exchange efficiency may be improved.

While this disclosure includes specific examples, it will be apparent to one of ordinary skill in the art that various changes in form and details may be made in these examples. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner.

Accordingly, other implementations are within the scope of the invention as defined by the following claims.

### [Explanation of Reference Numerals]

1 Cooling system for drive motor
10 Cooling apparatus for drive motor
11 First water jacket
111 First housing
1111 First surface
1112 Second surface
1113 Third surface
1114 First dividing plate
1115 First inner space
1116 Second inner space
1117 Coolant outlet
1118 Cooling oil inlet
1119 Cooling oil outlet
112 First cooling channel
1121 Rib
1122 Heat sink
1123 Groove
1124 Protrusion
1125 Depression
1126 Body
1127 End portion
12 Second water jacket
121 Second housing
1211 Fourth surface
1212 Fifth surface
1213 Sixth surface
1214 Second dividing plate
1215 Third inner space
1216 Fourth inner space
1217 Coolant inlet
122 Second cooling channel
13 First cover member
14 Fourth cover member
20 Housing of drive motor
30 Oil pump
40 Oil cooling line
50 Oil reserve tank

## Claims

1. A cooling apparatus (10) for a drive motor comprising an oil reserve tank (50) in which cooling oil flows, the cooling apparatus (10) comprising:
a first water jacket (11) in which a first cooling channel (112) passing up and down through the oil reserve tank (50) is formed; and
a second water jacket (12) in which a second cooling channel (122) corresponding to the first cooling channel (112) is formed,
wherein the first water jacket (11) and the second water jacket (12) are coupled to form the oil reserve tank (50), **characterized in that** the first water jacket (11) comprises:
a first housing (111) in which a first water jacket inner space is defined by a first surface (1111), a second surface (1112) opposite to the first surface (1111), and at least two third surfaces (1113) forming a side between the first surface (1111) and the second surface (1112); and
a first dividing plate (1114) dividing the first water jacket inner space into a first inner space (1115) through which coolant flows and a second inner space (1116) through which cooling oil flows,
and the first cooling channel (112) extends from the first dividing plate (1114) and passes through the second inner space (1116).

2. The cooling apparatus of claim 1, wherein the second water jacket (12) comprises:
a second housing (121) in which a second water jacket inner space is defined by a fourth surface (1211), a fifth surface (1212) opposite to the fourth surface (1211), and at least two sixth surfaces (1213) forming a side between the fourth surface (1211) and the fifth surface (1212); and
a second dividing plate (1214) dividing the inner space of the second water jacket into a third inner space (1215) through which cooling oil flows and a fourth inner space (1216) through which coolant flows,
and the second cooling channel (122) extends from the second dividing plate (1214) and passes through the third inner space (1215).

3. The cooling apparatus (10) of claim 2, wherein
the first cooling channel (112) extends from the first dividing plate (1114) to an end portion of the second inner space (1116), and the second cooling channel (122) extends from the second dividing plate (1214) to an end portion of the third inner space (1215).

4. The cooling apparatus (10) of claim 2 or 3, wherein
in response to the first water jacket (11) and the second water jacket (12) being coupled, the second inner space (1116) and the third inner space (1215) are combined to form the oil reserve tank (50), and the first cooling channel (112) and the second cooling channel (122) are connected to pass through the oil reserve tank (50), and
the oil reserve tank (50) is formed by at least a portion of the first surface (1111), at least a portion of the second surface (1112), at least portions of the third surfaces (1113), at least a portion of the fourth surface (1211), at least a portion of the fifth surface (1212), at least portions of the sixth surfaces (1213), the first dividing plate (1114), and the second dividing plate (1214).

5. The cooling apparatus (10) of one of claims 2 to 4, wherein
a coolant inlet (1217) is formed on the first surface (1111) and a coolant outlet (1117) is formed on the fifth surface (1212).

6. The cooling apparatus (10) of one of claims 2 to 4, wherein
ribs are formed in a connecting portion between the first cooling channel (112) and the first dividing plate (1114), and in a connecting portion between the second cooling channel (122) and the second dividing plate (1214).

7. The cooling apparatus (10) of one of claims 2 to 4, further comprising:
a first cover member (13) covering an end portion of the first inner space (1115), and a fourth cover member (14) covering an end portion of the fourth inner space (1216),
wherein the end portions of the first inner space (1115) and the fourth inner space (1216) are open.

8. The cooling apparatus (10) of one of claims 1 to 4, wherein
a plurality of first cooling channels (112) and a plurality of second cooling channels (122) are provided, and the first cooling channel (112) and the second cooling channel (122) each have a hexagonal cross section.

9. The cooling apparatus (10) of claim 8, wherein
at least two of the plurality of first cooling channels (112) are disposed adjacent to each other and connected to each other, or at least two of the plurality of second cooling channels (122) are disposed adjacent to each other and connected to each other.

10. The cooling apparatus (10) of claim 9, further comprising
a heat sink (1122) connecting adjacent cooling channels, wherein the heat sink (1122) is slidably coupled to a longitudinal groove (1123) of the adjacent cooling channels.

11. The cooling apparatus (10) of claim 8, wherein
at least a portion of the first cooling channel (112) or at least a portion of the second cooling channel (122) comprises a protrusion (1124) protruding from an end portion and a depression (1125) recessed from the end portion and having a shape corresponding to the protrusion (1124).

12. The cooling apparatus (10) of one of claims 1 to 4, wherein the first cooling channel (112) or the second cooling channel (122) comprises:
a cooling channel body (1126) at least partly composed of a metallic material; and
a cooling channel end portion (1127) connected to the cooling channel body (1126), and at least partly composed of a plastic material.

13. A method of manufacturing a cooling apparatus (10) for a drive motor comprising an oil reserve tank (50) in which cooling oil flows, the method comprising:
manufacturing (S10) a first water jacket (11) in which a first cooling channel (112) passing up and down through the oil reserve tank (50) is formed;
manufacturing (S20) a second water jacket (12) in which a second cooling channel (122) corresponding to the first cooling channel (112) is formed;
aligning (S30) the first cooling channel (112) and the second cooling channel (122); and
coupling (S40) the first water jacket (11) and the second water jacket (12) to form an inner space of the oil reserve tank (50), **characterized in that**
the first cooling channel (112) or the second cooling channel (122) comprises a cooling channel body (1126) at least partly composed of a metallic material and a cooling channel end portion (1127) connected to the cooling channel body (1126) and at least partly composed of a plastic material, and at least one of the first cooling channel (112) or the second cooling channel (122) is manufactured by double injection, and
the coupling of the first water jacket (11) and the second water jacket (12) is performed by ultrasonic welding.

## Patentansprüche

1. Kühlvorrichtung (10) für einen Antriebsmotor, umfassend einen Ölreservetank (50), in dem Kühlöl fließt, wobei die Kühlvorrichtung (10) umfasst:
einen ersten Wassermantel (11), in dem ein erster Kühlkanal (112) ausgebildet ist, der durch den Ölreservetank (50) nach oben und unten verläuft; und
einen zweiten Wassermantel (12), in dem ein zweiter Kühlkanal (122) ausgebildet ist, der dem ersten Kühlkanal (112) entspricht,
wobei der erste Wassermantel (11) und der zweite Wassermantel (12) gekoppelt sind, um den Ölreservetank (50) zu bilden, **dadurch gekennzeichnet, dass** der erste Wassermantel (11) umfasst:
ein erstes Gehäuse (111), in dem ein erster Wassermantelinnenraum durch eine erste Oberfläche (1111), eine zweite Oberfläche (1112) gegenüber der ersten Oberfläche (1111) und mindestens zwei dritte Oberflächen (1113), die eine Seite zwischen der ersten Oberfläche (1111) und der zweiten Oberfläche (1112) bilden, definiert ist; und eine erste Trennplatte (1114), die den ersten Wassermantelinnenraum in einen ersten Innenraum (1115), durch den Kühlmittel fließt, und einen zweiten Innenraum (1116), durch den Kühlöl fließt, unterteilt,
und der erste Kühlkanal (112) erstreckt sich von der ersten Trennplatte (1114) und verläuft durch den zweiten Innenraum (1116).

2. Kühlvorrichtung nach Anspruch 1, wobei der zweite Wassermantel (12) umfasst:
ein zweites Gehäuse (121), in dem ein zweiter Wassermantelinnenraum durch eine vierte Oberfläche (1211), eine fünfte Oberfläche (1212) gegenüber der vierten Oberfläche (1211) und mindestens zwei sechste Oberflächen (1213), die eine Seite zwischen der vierten Oberfläche (1211) und der fünften Oberfläche (1212) bilden, definiert ist; und
eine zweite Trennplatte (1214), die den Innenraum des zweiten Wassermantels in einen dritten Innenraum (1215), durch den Kühlöl fließt, und einen vierten Innenraum (1216), durch den Kühlmittel fließt, unterteilt,
und der zweite Kühlkanal (122) erstreckt sich von der zweiten Trennplatte (1214) und verläuft durch den dritten Innenraum (1215).

3. Kühlvorrichtung (10) nach Anspruch 2, wobei
der erste Kühlkanal (112) sich von der ersten Trennplatte (1114) zu einem Endabschnitt des zweiten Innenraums (1116) erstreckt, und der zweite Kühlkanal (122) sich von der zweiten Trennplatte (1214) zu einem Endabschnitt des dritten Innenraums (1215) erstreckt.

4. Kühlvorrichtung (10) nach Anspruch 2 oder 3, wobei
als Reaktion auf das Koppeln des ersten Wassermantels (11) und des zweiten Wassermantels (12) der zweite Innenraum (1116) und der dritte Innenraum (1215) kombiniert werden, um den Ölreservetank (50) zu bilden, und der erste Kühlkanal (112) und der zweite Kühlkanal (122) verbunden werden, um durch den Ölreservetank (50) zu führen, und
der Ölreservetank (50) durch mindestens einen Abschnitt der ersten Oberfläche (1111), mindestens einen Abschnitt der zweiten Oberfläche (1112), mindestens Abschnitte der dritten Oberflächen (1113), mindestens einen Abschnitt der vierten Oberfläche (1211), mindestens einen Abschnitt der fünften Oberfläche (1212), mindestens Abschnitte der sechsten Oberflächen (1213), die erste Trennplatte (1114) und die zweite Trennplatte (1214) gebildet ist.

5. Kühlvorrichtung (10) nach einem der Ansprüche 2 bis 4, wobei
ein Kühlmitteleinlass (1217) an der ersten Oberfläche (1111) und ein Kühlmittelauslass (1117) an der fünften Oberfläche (1212) ausgebildet ist.

6. Kühlvorrichtung (10) nach einem der Ansprüche 2 bis 4, wobei
Rippen in einem Verbindungsabschnitt zwischen dem ersten Kühlkanal (112) und der ersten Trennplatte (1114) und in einem Verbindungsabschnitt zwischen dem zweiten Kühlkanal (122) und der zweiten Trennplatte (1214) ausgebildet sind.

7. Kühlvorrichtung (10) nach einem der Ansprüche 2 bis 4, ferner umfassend:
ein erstes Abdeckelement (13), das einen Endabschnitt des ersten Innenraums (1115) abdeckt, und ein viertes Abdeckelement (14), das einen Endabschnitt des vierten Innenraums (1216) abdeckt,
wobei die Endabschnitte des ersten Innenraums (1115) und des vierten Innenraums (1216) offen sind.

8. Kühlvorrichtung (10) nach einem der Ansprüche 1 bis 4, wobei
eine Vielzahl von ersten Kühlkanälen (112) und eine Vielzahl von zweiten Kühlkanälen (122) vorgesehen sind und der erste Kühlkanal (112) und der zweite Kühlkanal (122) jeweils einen sechseckigen Querschnitt aufweisen.

9. Kühlvorrichtung (10) nach Anspruch 8, wobei
mindestens zwei der Vielzahl von ersten Kühlkanälen (112) nebeneinander angeordnet und miteinander verbunden sind oder mindestens zwei der Vielzahl von zweiten Kühlkanälen (122) nebeneinander angeordnet und miteinander verbunden sind.

10. Kühlvorrichtung (10) nach Anspruch 9, ferner umfassend
einen Kühlkörper (1122), der benachbarte Kühlkanäle verbindet, wobei der Kühlkörper (1122) verschiebbar mit einer Längsnut (1123) der benachbarten Kühlkanäle gekoppelt ist.

11. Kühlvorrichtung (10) nach Anspruch 8, wobei
mindestens ein Abschnitt des ersten Kühlkanals (112) oder mindestens ein Abschnitt des zweiten Kühlkanals (122) einen Vorsprung (1124), der von einem Endabschnitt vorsteht, und eine Vertiefung (1125), die von dem Endabschnitt ausgespart ist und eine Form aufweist, die dem Vorsprung (1124) entspricht, umfasst.

12. Kühlvorrichtung (10) nach einem der Ansprüche 1 bis 4, wobei der erste Kühlkanal (112) oder der zweite Kühlkanal (122) umfasst:
einen Kühlkanalkörper (1126), der zumindest teilweise aus einem metallischen Material besteht; und
einen Kühlkanalendabschnitt (1127), der mit dem Kühlkanalkörper (1126) verbunden ist und zumindest teilweise aus einem Kunststoffmaterial besteht.

13. Verfahren zur Herstellung einer Kühlvorrichtung (10) für einen Antriebsmotor, umfassend einen Ölreservetank (50), in dem Kühlöl fließt, wobei das Verfahren umfasst:
Herstellen (S10) eines ersten Wassermantels (11), in dem ein erster Kühlkanal (112) ausgebildet ist, der nach oben und unten durch den Ölreservetank (50) verläuft;
Herstellen (S20) eines zweiten Wassermantels (12), in dem ein zweiter Kühlkanal (122) ausgebildet ist, der dem ersten Kühlkanal (112) entspricht;
Ausrichten (S30) des ersten Kühlkanals (112) und des zweiten Kühlkanals (122); und Koppeln (S40) des ersten Wassermantels (11) und des zweiten Wassermantels (12) zur Bildung eines Innenraums des Ölreservetanks (50), **dadurch gekennzeichnet, dass**
der erste Kühlkanal (112) oder der zweite Kühlkanal (122) einen Kühlkanalkörper (1126), der zumindest teilweise aus einem metallischen Material besteht, und einen Kühlkanalendabschnitt (1127), der mit dem Kühlkanalkörper (1126) verbunden ist und zumindest teilweise aus einem Kunststoffmaterial besteht, umfasst, und zumindest einer von dem ersten Kühlkanal (112) oder dem zweiten Kühlkanal (122) durch Doppelspritzen hergestellt ist, und
die Kopplung des ersten Wassermantels (11) und des zweiten Wassermantels (12) durch Ultraschallschweißen erfolgt.

## Revendications

1. Appareil de refroidissement (10) pour un moteur d'entraînement comprenant un réservoir de réserve d'huile (50) dans lequel circule l'huile de refroidissement, l'appareil de refroidissement (10) comprenant:
une première chemise d'eau (11) dans laquelle est formé un premier canal de refroidissement (112) traversant de haut en bas le réservoir de réserve d'huile (50) ; et
une seconde chemise d'eau (12) dans laquelle est formé un second canal de refroidissement (122) correspondant au premier canal de refroidissement (112),
dans lequel la première chemise d'eau (11) et la seconde chemise d'eau (12) sont couplées pour former le réservoir de réserve d'huile (50), **caractérisé en ce que** la première chemise d'eau (11) comprend:
un premier logement (111) dans lequel un premier espace intérieur de la chemise d'eau est défini par une première surface (1111), une deuxième surface (1112) opposée à la première surface (1111), et au moins deux troisièmes surfaces (1113) formant un côté entre la première surface (1111) et la deuxième surface (1112) ; et
une première plaque de séparation (1114) divisant le premier espace intérieur de la chemise d'eau en un premier espace intérieur (1115) à travers lequel circule le liquide de refroidissement et un second espace intérieur (1116) à travers lequel circule l'huile de refroidissement,
et le premier canal de refroidissement (112) s'étend à partir de la première plaque de séparation (1114) et traverse le deuxième espace intérieur (1116).

2. Appareil de refroidissement selon la revendication 1, dans lequel la seconde chemise d'eau (12) comprend:
un second logement (121) dans lequel un deuxième espace intérieur de chemise d'eau est défini par une quatrième surface (1211), une cinquième surface (1212) opposée à la quatrième surface (1211), et au moins deux sixièmes surfaces (1213) formant un côté entre la quatrième surface (1211) et la cinquième surface (1212); et
une seconde plaque de séparation (1214) divisant l'espace intérieur de la seconde chemise d'eau en un troisième espace intérieur (1215) à travers lequel circule l'huile de refroidissement et un quatrième espace intérieur (1216) à travers lequel circule le liquide de refroidissement,
et le second canal de refroidissement (122) s'étend à partir de la seconde plaque de séparation (1214) et traverse le troisième espace intérieur (1215).

3. Appareil de refroidissement (10) selon la revendication 2, dans lequel
le premier canal de refroidissement (112) s'étend de la première plaque de séparation (1114) à une partie d'extrémité du deuxième espace intérieur (1116), et le second canal de refroidissement (122) s'étend de la seconde plaque de séparation (1214) à une partie d'extrémité du troisième espace intérieur (1215).

4. Appareil de refroidissement (10) selon la revendication 2 ou 3, dans lequel
en réponse au couplage de la première chemise d'eau (11) et de la seconde chemise d'eau (12), le deuxième espace intérieur (1116) et le troisième espace intérieur (1215) sont combinés pour former le réservoir de réserve d'huile (50), et le premier canal de refroidissement (112) et le second canal de refroidissement (122) sont reliés pour traverser le réservoir de réserve d'huile (50), et
le réservoir de réserve d'huile (50) est formé par au moins une partie de la première surface (1111), au moins une partie de la deuxième surface (1112), au moins des parties des troisièmes surfaces (1113), au moins une partie de la quatrième surface (1211), au moins une partie de la cinquième surface (1212), au moins des parties des sixièmes surfaces (1213), la première plaque de séparation (1114), et la seconde plaque de séparation (1214).

5. Appareil de refroidissement (10) selon l'une des revendications 2 à 4, dans lequel
une entrée de liquide de refroidissement (1217) est formée sur la première surface (1111) et une sortie de liquide de refroidissement (1117) est formée sur la cinquième surface (1212).

6. Appareil de refroidissement (10) selon l'une des revendications 2 à 4, dans lequel
des nervures sont formées dans une partie de connexion entre le premier canal de refroidissement (112) et la première plaque de séparation (1114), et dans une partie de connexion entre le second canal de refroidissement (122) et la seconde plaque de séparation (1214).

7. Appareil de refroidissement (10) selon l'une des revendications 2 à 4, comprenant en outre:
un premier élément de couverture (13) couvrant une partie d'extrémité du premier espace intérieur (1115), et un quatrième élément de couverture (14) couvrant une partie d'extrémité du quatrième espace intérieur (1216),
dans lequel les parties d'extrémité du premier espace intérieur (1115) et du quatrième espace intérieur (1216) sont ouvertes.

8. Appareil de refroidissement (10) selon l'une des revendications 1 à 4, dans lequel
une pluralité de premiers canaux de refroidissement (112) et une pluralité de seconds canaux de refroidissement (122) sont prévus, et le premier canal de refroidissement (112) et le second canal de refroidissement (122) ont chacun une section transversale hexagonale.

9. Appareil de refroidissement (10) selon la revendication 8, dans lequel au moins deux de la pluralité de premiers canaux de refroidissement (112) sont adjacents et reliés l'un à l'autre, ou au moins deux de la pluralité de seconds canaux de refroidissement (122) sont adjacents et reliés l'un à l'autre.

10. Appareil de refroidissement (10) selon la revendication 9, comprenant en outre un dissipateur thermique (1122) reliant les canaux de refroidissement adjacents, dans lequel le dissipateur thermique (1122) est couplé de manière coulissante à une rainure longitudinale (1123) des canaux de refroidissement adjacents.

11. Appareil de refroidissement (10) selon la revendication 8, dans lequel
au moins une partie du premier canal de refroidissement (112) ou au moins une partie du second canal de refroidissement (122) comprend une partie saillante (1124) faisant saillie à partir d'une partie d'extrémité et une dépression (1125) en retrait de la partie d'extrémité et ayant une forme correspondant à la partie saillante (1124).

12. Appareil de refroidissement (10) selon l'une des revendications 1 à 4, dans lequel le premier canal de refroidissement (112) ou le second canal de refroidissement (122) comprend:
un corps de canal de refroidissement (1126) composé au moins en partie d'un matériau métallique; et
une partie d'extrémité de canal de refroidissement (1127) reliée au corps du canal de refroidissement (1126) et composée au moins en partie d'une matière plastique.

13. Procédé de fabrication d'un appareil de refroidissement (10) pour un moteur d'entraînement comprenant un réservoir de réserve d'huile (50) dans lequel circule de l'huile de refroidissement, le procédé comprenant:
la fabrication (S10) d'une première chemise d'eau (11) dans laquelle est formé un premier canal de refroidissement (112) traversant de haut en bas le réservoir de réserve d'huile (50);
la fabrication (S20) d'une seconde chemise d'eau (12) dans laquelle est formé un second canal de refroidissement (122) correspondant au premier canal de refroidissement (112);
l'alignement (S30) du premier canal de refroidissement (112) et du second canal de refroidissement (122); et
le couplage (S40) de la première chemise d'eau (11) et de la seconde chemise d'eau (12) pour former un espace intérieur du réservoir de réserve d'huile (50), **caractérisé en ce que**
le premier canal de refroidissement (112) ou le second canal de refroidissement (122) comprend un corps de canal de refroidissement (1126) composé au moins en partie d'un matériau métallique et une partie d'extrémité de canal de refroidissement (1127) reliée au corps de canal de refroidissement (1126) et composée au moins en partie d'un matériau plastique, et au moins l'un du premier canal de refroidissement (112) ou du second canal de refroidissement (122) est fabriqué par double injection, et
le couplage de la première chemise d'eau (11) et de la seconde chemise d'eau (12) est réalisé par soudage ultrasonique.
